Europäisches Patentamt

European Patent Office

Office européen des brevets

(19)

(11) Veröffentlichungsnummer: **0 259 602**
**A1**

# (12) EUROPÄISCHE PATENTANMELDUNG

(21) Anmeldenummer: 87111258.7

(22) Anmeldetag: 04.08.87

(51) Int. Cl.⁴: **B23H 7/02** , B23H 7/06 , B23H 7/26 , B23H 11/00

(30) Priorität: 08.08.86 CH 3181/86

(43) Veröffentlichungstag der Anmeldung:
16.03.88 Patentblatt 88/11

(84) Benannte Vertragsstaaten:
AT CH DE ES FR GB IT LI NL SE

(71) Anmelder: **Büchler B-SET AG**
**Wiler Strasse 98**
**CH-9230 Flawil(CH)**

(72) Erfinder: **Büchler, René**
**Weidweg 2**
**CH-9245 Sonnental SG(CH)**

(74) Vertreter: **von Bülow, Tam, Dipl.-Ing.,**
**Dipl.-Wirtsch.-Ing. et al**
**SAMSON & BÜLOW Widenmayerstrasse 5**
**D-8000 München 22(DE)**

(54) Vorrichtung zum Feststellen der Erosionsdrahtposition in einer Elektroerosionsmaschine.

(57) Vorrichtung zum genauen Feststellen der Position eines Erosionsdrahts (18) in einer Elektroerosionsmaschine als Grundlage für Einstellung, Kontrolle oder Nachjustierung der Erosionsdrahtposition für einen Werkstückbearbeitungsvorgang, mit mindestens einem Berührungs-Fühlelement (24; 26; 38; 44; 46), das mittels einer Maschinentischbewegung in Berührung mit dem Erosionsdraht (18) verfahrbar ist, wobei eine das mindestens eine Fühlelement (24; 26; 38; 44; 46) aufweisende Fühleinheit (2) vorgesehen ist, die mit definierter Lage relativ zu einem Werkstück (6) in lösbarer Weise an diesem angebracht ist.

Fig.1

EP 0 259 602 A1

## Vorrichtung zum Feststellen der Erosionsdrahtposition in einer Elektroerosionsmaschine

Die Erfindung bezieht sich auf eine Vorrichtung zum genauen Feststellen der Position eines Erosionsdrahts in einer Elektroerosionsmaschine als Grundlage für Einstellung, Kontrolle oder Nachjustierung der Erosionsdrahtposition für einen Werkstückbearbeitungsvorgang, mit mindestens einem Berührungs-Fühlelement, das mittels einer Maschinentischbewegung in Berührung mit dem Erosionsdraht verfahrbar ist.

Bei bekannten Vorrichtungen dieser Art hat man bisher das Fühlelement bzw. die Fühlelemente zur Einstellung der Erosionsdrahtposition vor Beginn einer Werkstückbearbeitung an dem Maschinentisch befestigt, durch Verfahren des Maschinentischs bis zur Berührung des jeweiligen Fühlelements mit dem Erosionsdraht dessen dortige Position festgestellt und dann auf der Grundlage dieser Feststellung die Positionseinstellung des Erosionsdrahts vorgenommen. Dieses Positionsfeststellen und Positionseinstellen wurde ggf. in mehreren Schritten in einer Bewegungsrichtung des Maschinentischs und ggf. für mehrere Fühlelemente in mehreren Bewegungsrichtungen des Maschinentischs vorgenommen. Dann wurde das zu bearbeitende Werkstück auf den Maschinentisch aufgespannt, und Kontrollen oder Nachjustierungen der Erosionsdrahtposition vor Beendigung der jeweiligen Werkstückbearbeitung erforderten in der Regel ein Abspannen und nachfolgendes, erneutes Aufspannen des Werkstücks auf den Maschinentisch. Da das Feststellen der Position der Erosionsdrahtes relativ zu dem Maschinentisch vorgenommen wurde, lag überdies eine die Genauigkeit der Werkstückbearbeitung vermindernde Fehlermöglichkeit beim Aufspannen des jeweiligen Werkstücks vor.

Der Erfindung liegt die Aufgabe zugrunde, eine Vorrichtung der eingangs genannten Art zu - schaffen, bei der die Position des Erosionsdrahts einfacher und mit geringerer Fehlermöglichkeit relativ zu dem zu bearbeitenden Werkstück festgestellt werden kann und bei der zwischenzeitlich vor Beendigung der Werkstückbearbeitung Kontrollen und ggf. Nachjustierungen der Position des Erosionsdrahts auf einfachere Weise möglich sind.

Zur Lösung dieser Aufgabe ist die erfindungsgemässe Vorrichtung gekennzeichnet durch eine das mindestens eine Fühlelement aufweisende Fühleinheit, die mit definierter Lage relativ zu einem Werkstück in lösbarer Weise an diesem angebracht ist.

Aufgrund der Erfindung wird also die Position des Erosionsdrahts in Relation zu dem zu bearbeitenden Werkstück umittelbarer und damit grundsätzlich genauer festgestellt und wird eine Kontrolle oder Nachjustierung der Erosionsdrahtposition auch nach Durchführung eines Teils der Werkstückbearbeitung auf einfachste Weise ermöglicht.

Nachfolgend wird der Erosionsdraht zum Zweck der Verkürzung der Ausdrucksweise als "Draht" bezeichnet. In der Regel verläuft der Erosionsdraht in im wensentlichen vertikaler Richtung in der Maschine und wird die Einstellung oder Nachjustierung der Erosionsdrahtlage. bzw. - position durch Verstellen des oberen und/oder unteren Führungskopfes des Drahts in einer horizontalen Ebene vorgenommen.

Bevorzugte Ausgestaltungen der Erfindung sind in den Unteransprüchen gekennzeichnet.

Die in den Ansprüchen 2 bis 4 angegebenen Ausbildungsmöglichkeiten der Fühleinheit eignen sich besonders gut dafür, die Position eines einer bestimmten Höhe in der Maschine zugeordneten Drahtbereichs in einer horizontalen Ebene, die üblicherweise als xy-Ebene bezeichnet wird, festzustellen. Dabei geht man normalerweise so vor, dass man den Maschinentisch mit dem aufgespannten Werkstück mitsamt Fühleinheit in einer ersten Richtung, normalerweise der sogenannten x-Richtung, verfährt, bis ein Fühlelement bzw. das Fühlelement den Draht berührt. Hernach wird analog die Feststellung der Drahtposition in einer zweiten, normalerweise rechtwinklig zur x-Richtung liegenden, sogenannten y-Richtung durchgeführt. Günstigerweise liegen die Mantellinien der Fühlwalze rechtwinklig zur zugehörigen Verfahrrichtung. Wenn man statt zweier Fühlwalzen einen Fühlring verwendet, erfolgen diese beiden Feststellungen an um im wesentlichen 90 Grad versetzten Innenumfangsstellen des Fühlrings.

Die Ausbildungen gemäss Ansprüchen 5 und 6 eignen sich besonders gut zur Feststellung der vertikalen oder unter einem definierten Winkel zur Vertikalen schräggestellten Ausrichtung des Drahts.

Aufgrund der Massnahmen der Ansprüche 7 und 8 kann man die Fühlfläche (n) des Fühlelements bzw. der Fühlelemente besonders einfach in definierte Relativlage zu bestimmten Referenzflächen des Werkstücks bringen, was der Genauigkeit und Einfachheit der Drahtpositionsfestellung dienlich ist.

Mit den Massnahmen der Ansprüche 9 und 10 kann man die Fühleinheit bzw. Fühlelemente besonders einfach an dem Werkstück anbringen und abnehmen. In den meisten Fällen wird man die Fühleinheit bzw. deren Fühlelement(e) nur dann anbringen, wenn tatsächlich eine Anfangseinstellung, Kontrolle oder Nachjustierung der Drahtposition erfolgen soll, und wird sie in der Zwischenzeit abnhemen.

Generell ist darauf hinzuweisen, dass bei Elektroerosionsmaschinen eine Genauigkeit der Positionseinstellung der Drahts im Bereich von wenigen Tausendstel eines Millimeters wünschenswert ist, was mittels der Erfindung auf vergleichsweise einfache Art und mit Nachjustierungsmöglichkeit bewältigbar ist.

Die Erfindung bezieht sich auch auf die Fühleinheit an sich, also im nicht am Werkstück in der Elektroerosionsmaschine angebrachten Zustand.

Die Erfindung und Ausgestaltungen der Erfindung werden nachfolgend anhand bevorzugter, zeichnerisch dargestellter Ausführungsbeispiele noch näher erläutert. Es ziegen:

Figur 1 eine perspektivische Ansicht einer an einem Werkstück angebrachten Fühleinheit, wobei zwei Ausbildungsmöglichkeiten der Einfachheit halber gemeinsam bei der gleichen Fühleinheit dargestellt sind;

Figur 2 eine Ansicht der Fühleinheit gemäss Figur 1, gesehen von unten nach oben;

Figur 3 eine perspektivische Ansicht eines weiteren Ausführungsbeispiels der Fühleinheit;

Figur 4 ein weiteres Ausführungsbeispiel einer Fühleinheit.

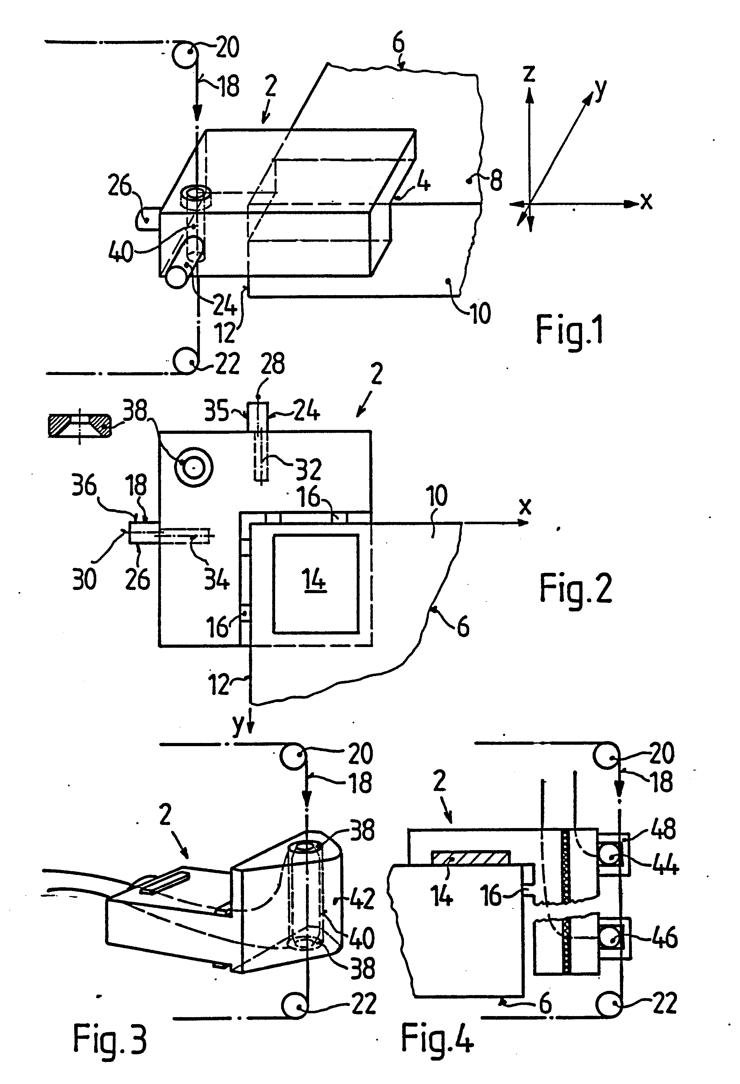

Die in Figuren 1 und 2 dargestellte Fühleinheit 2 weist einen Grundkörper im wesentlichen in Gestalt eines Quaders mit einer grossen, von einer Ecke ausgehenden, quderförmigen Ausnehmung 4 auf. Die Fühleinheit 2 ist mit der Ausnehmung 4 auf einem Eckbereich eines aus Veranschaulichungsgründen quaderförmig gezeichneten Werkstücks 6 aufgesetzt. Die obere Fläche 8 des Werkstücks 6 ist horizontal und liegt in der xy-Ebene der Elektroerosionsmaschine. Die gezeichneten Seitenflächen 10, 12 des Werkstücks 6 liegen rechtwinklig zueinander und rechtwinklig zur oberen Fläche 8. In der der oberen Fläche 8 des Werkstücks 6 zugewandten Fläche der Ausnehmung 4 befindet sich die ebene Polfläche eines Magneten 14 zur magnetischen Anbringung der Fühleinheit 2 am Werkstück 6, wobei Abstandswarzen 16 an den Seitenflächen der Ausnehmung 4 für eine genau definierte Anbringungsposition sorgen. Der Erosionsdraht 18 der Maschine ist vertikal verlaufend dargestellt. Ein oberer Führungskopf 20 und ein unterer Führungskopf 22 des Drahts 18 sind schematisch dargestellt.

Von den freien Seitenflächen der Fühleinheit 2 nach aussen ragend sind eine erste Fühlwalze 24 und eine zweite Fühlwalze 26 vorgesehen. Die erste Fühlwalze 24 liegt mit ihrer Achse 28 in y-Richtung der Maschine und die zweite Fühlwalze 26 liegt mit ihrer Längsachse 30 in x-Richtung der Maschine. Die erste Fühlwalze hat eine exzentrische Anbringungsachse 32 an der Fühleinheit 2, und die zweite Fühlwalze 26 hat eine exzentrische Anbringungsachse 34 an der Fühleinheit 2. Durch Verdrehen der Fühlwalzen 24, 26 um die jeweilige Anbringungsachse 32 bzw. 34 lässt sich die jeweilige, senkrechte Tangentialfläche 35 bzw. 36 fluchtend mit der jeweiligen Seitenfläche 12 bzw. 10 des Werkstücks 6 oder mit einem definierten Abstand zu diesen Seitenflächen 12 bzw. 10 einstellen. Die Fühlwalzen 24, 26 bestehen mindestens an demjenigen Umfangsbereich, der als Fühlfläche dient, aus Hartmetall. Der jeweilige Fühlbereich der Fühlwalzen 24, 26 ist gegenüber der Fühleinheit 2 isoliert, so dass bei Nutzung des Drahts 18 als Stromleiter auf elektrischem Wege präzise festgestellt werden kann, wann die jeweilige Fühlwalze 24, 26 in Berührung mit dem Draht 18 kommt.

Zur Feststellung der Position des Drahts 18 in der Höhe der Fühlwalzen 24, 26 wird der nicht eingezeichnete Maschinentisch, auf dem das Werkstück 6 aufgespannt ist, zunächst in x-Richtung verfahren, bis die erste Fühlwalze 24 mit ihrem Umfang mit dem Draht 18 in Berührung kommt. Dann kann eine gewünschte oder erforderliche Einstellung oder Nachjustierung des Drahts 18, beispielsweise durch Verstellung des unteren Führungskopfes 22 in x-Richtung, erfolgen. Anschliessend erfolgt analog der gleiche Vorgang in y-Richtung mit der zweiten Fühlwalze 26. Die Maschine ist mit einem Rechner ausgestattet, der die festgestellten Drahtpositionswerte in x-Richtung und in y-Richtung mit gespeicherten Sollwerten vergleicht.

Statt der beiden Fühlwalzen 24, 26 kann man mit einem Fühlring 38 an der Fühleinheit 2 arbeiten. Der Fühlring 38 aus Hartmetall hat eine Bohrung mit senkrechter Achse, die so weit angesenkt ist, dass ein nur etwa zwei bei drei Zehntel mm hoher, zylindrischer Bohrungsbereich stehen bleibt. Das Anfahren bis zur Berührung zwischen dem Draht 18 und dem inneren Bohrungsrand erfolgt in x-Richtung und in y-Richtung analog wie bei den Fühlwalzen 24, 26, wobei man vorzugsweise so vorgeht, dass sowohl in x-Richtung als auch in y-Richtung wechselseitig bis an die beiden gegenüberliegenden Borhungswandbereiche gefahren wird, so dass sich die Lage der Borhungsachse als Mittelwert ergibt. Da der Abstand der Bohrungsachse von den Referenzflächen 10, 12 des Werkstücks 6 definiert und bekannt ist, lässt sich die Lage der Bohrungsachse unter Mithilfe des Rechners der Maschine genau feststellen. Der Fühlring 38 ist in eine entsprechende Bohrungsansenkung einer Bohrung 40 der Fühleinheit 2 mit Passsitz eingelegt. Bei gewünscht von der Vertikalen abweichender Ausrichtung des Drahts 18 bietet

der Führring 38 Genauigkeitsvorteile gegenüber den Fühlwalzen 24, 26, so dass es auch möglich ist, bei ein und derselben Fühleinheit 2 beide Ausführungsmöglichkeiten gemeinsam vorzusehen.

Die in Fig. 3 dargestellte Fühleinheit 2 weist einen im wesentlichen quaderfömigen Grundkörper mit einem in Vertikalrichtung höheren Fortsatz 42 auf, so dass eine Hauptanlagefläche und eine dazu rechtwinklige, seitliche Anlagefläche, jeweils mit Abstandswarzen, gebildet sind. Die obere, seitliche Anlagefläche oberhalb des quaderförmigen Bereichs ist höher als die untere, seitliche Anlagefläche unterhalb des Quaderbereichs, so dass man für dickere Werkstücke mit dem oberen, seitlichen Anlagebereich und für dünnere Werkstücke mit dem unteren, seitlichen Anlagebereich arbeiten kann. Der Fortsatz 42 weist eine vertikale Bohrung 40 auf, bei der in einer oberen Ansenkung und in einer unteren Ansenkung jeweils ein Führring 38 analog wie bei der zuvor beschriebenen Ausführungsform eingelegt ist. Wenn die Fühleinheit 2 auf einer waagrechten Fläche eines Werkstücks angebracht wird, lässt sich der Draht 18 genau vertikal ausrichten. Beispielsweise wird der obere Führungskopf 20 so lang in einer horizontalen Ebene verstellt, bis der obere und der untere Führring 38 Berührung mit dem Draht 18 feststellen resp. gleichen x-Wert feststellen, und zwar sinnvollerweise nacheinander für x-Richtung und für y-Richtung. Es ist auf diese Art auch möglich, eine definierte, gewünschte Ausrichtung des Drahts 18 unter einem Winkel zur Vertikalen einzustellen.

Die Fühleinheit 2 gemäss Fig. 4 hat eine im wesentlichen L-förmige Gestalt. An der werkstückabgewandten, vertikalen Stirnseite der Fühleinheit 2 sind parallel übereinander mit waagrechten Längsachsen zwei Fühlwalzen 44, 46 mit Hilfe von U-förmigen Magnethaltern 48 angebracht. Der Draht 18 ist dann genau vertikal ausgerichtet, denn durch Berührung des Drahts 18 mit den Fühlwalzen 44, 46 gleiche Werte festgestellt werden.

Die Fühleinheiten der Ausführungsformen von Fig. 3 und 4 sind ebenefalls magnetisch am Werkstück 6 gehalten, wobei Abstandswarzen 16 für Genauigkeit sorgen. Für die Führringe 38 bei allen Ausführungsbeispielen und für die Fühlwalzen 44, 46 gilt hinsichtlich der elektrischen Isolation das im Zusammenhang mit dem ersten Ausführungsbeispiel Gesagte entsprechend, so dass die Berührung mit dem Draht 18 elektrisch festgestellt wird.

Der Rechner der Erosionsmaschine ist so programmiert, dass die Vorgänge des mehrmaligen Anfahrens bis zu Berührung zwischen dem Fühlelement bzw. den Fühlelementen und dem Draht sowie das schrittweise Einstellen oder Nachjustieren der Drahtposition bzw. Drahtausrichtung automatisch erfolgt. Auch das Einführen des Drahts 18 durch den Führring 38 oder die beiden Führringe 38 kann automatisch erfolgen.

**Ansprüche**

1. Vorrichtung zum genauen Feststellen der Position eines Erosionsdrahts (18) in einer Elektroerosionsmaschine als Grundlage für Einstellung, Kontrolle oder Nachjustierung der Erosionsdrahtposition für einen Werkstückbearbeitungsvorgang, mit mindestens einem Berührungs-Fühlelement (24; 26; 38; 44; 46), das mittels einer Maschinentischbewegung in Berührung mit dem Erosionsdraht (18) verfahrbar ist, gekennzeichnet durch eine das mindestens eine Fühlelement (24; 26; 38; 44; 46) aufweisende Fühleinheit (2), die mit definierter Lage relativ zu einem Werkstück (6) in lösbarer Weise an diesem angebracht ist.

2. Vorrichtung nach Anspruch 1, dadurch gekennzeichnet, dass die Fühleinheit (2) zwei winklig angeordnete Fühlwalzen (24, 26) aufweist.

3. Vorrichtung nach Anspruch 2, dadurch gekennzeichnet, dass die Achsen (28, 30) der beiden Fühlwalzen (24, 26) mindestens im wesentlichen in einer gemeinsamen Ebene liegen und vorzugsweise einen rechten Winkel miteinander bilden.

4. Vorrichtung nach einem der Ansprüche 1 bis 3, dadurch gekennzeichnet, dass die Fühleinheit (2) einen Führring (38) aufweist.

5. Vorrichtung nach einem der Ansprüche 1 bis 4, dadurch gekennzeichnet, dass die Fühleinheit (2) parallel übereinander zwei Fühlwalzen (44, 46) aufweist.

6. Vorrichtung nach einem der Ansprüche 1 bis 4, dadurch gekennzeichnet, dass die Fühleinheit parallel übereinander zwei Führringe (38) aufweist.

7. Vorrichtung nach einem der Ansprüche 1 bis 6, dadurch gekennzeichnet, dass die Lage der Fühlfläche mindestens eines Fühlelements (24; 26) relativ zu der Fühleinheit (2) einstellbar ist.

8. Vorrichtung nach Anspruch 7, dadurch gekennzeichnet, dass mindestens eine Fühlwalze (24; 26) exzentrisch an der Fühleinheit (2) angebracht und um die exzentrische Abringungsachse (32; 34) drehbar ist.

9. Vorrichtung nach einem der Ansprüche 1 bis 8, dadurch gekennzeichnet, dass die Fühleinheit (2) mit Magnetkraft (14) an dem Werkstück (6) angebracht ist.

10. Vorrichtung nach einem der Ansprüche 1 bis 9, dadurch gekennzeichnet, dass mindestens ein Fühlelement (44; 46) mit Magnetkraft (48) an der Fühleinheit (2) angebracht ist.

11. Vorrichtung nach einem der Ansprüche 1 bis 10, dadurch gekennzeichnet, dass das Fühlelement oder die Fühlelemente (24; 26; 38; 44; 46) elektrisch arbeiten.

12. Vorrichtung nach einem der Ansprüche 1 bis 11, dadurch gekennzeichnet, dass mindestens die Fühlfläche des Fühlelements bzw. der Fühlelemente (24; 26; 38; 44; 46) aus Hartmetall bestehen.

Fig.1

Fig.2

Fig.3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - A1 - 2 543 062 (AKTIENGESELLSCHAFT FÜR INDUSTRIELLE ELEKTRONIK) <br> * Ansprüche 1-3; Fig. 1,2 * <br> -- | 1 | B 23 H  7/02 <br> B 23 H  7/06 <br> B 23 H  7/26 <br> B 23 H 11/00 |
| A | DE - A1 - 3 536 864 (CHARMILLES TECHNOLOGIES) <br> * Zusammenfassung; Fig. 1,2 * <br> -- | | |
| A | EP - A1 - 0 145 657 (BÜCHLER B-SET AG) <br> * Zusammenfassung; Fig. 1,2 * <br> ---- | | |

| RECHERCHIERTE SACHGEBIETE (Int. Cl.4) |
|---|
| B 23 H  7/00 <br> B 23 H 11/00 |

Der vorliegende Recherchenbericht wurde für alle Patentansprüche erstellt.

| Recherchenort | Abschlußdatum der Recherche | Prüfer |
|---|---|---|
| WIEN | 29-12-1987 | TSILIDIS |